# EUROPEAN PATENT APPLICATION

(11) **EP 4 443 331 A1**
(43) Date of publication of application: **09.10.2024**
(21) Application number: 22918365.2
(22) Date of filing: 13.12.2022
(51) Int. Cl.: G06N 3/04, G06V 10/44

(54) **TABLE RECOGNITION METHOD AND APPARATUS**

(30) Priority: 07.01.2022 CN 202210018252
(71) Applicant: BEIJING YOUZHUJU NETWORK TECHNOLOGY CO. LTD., Beijing 101299 (CN)
(72) Inventor: ZHANG, Wenqiang, Beijing 100086 (CN); HUANG, Can, Beijing 100086 (CN)
(74) Representative: Dentons UK and Middle East LLP
(86) International application number: PCT/CN2022/138631
(87) International publication number: WO 2023/130915

(57) **Abstract**

This application discloses a method for table recognition which can acquire an image to be processed that comprises a table, and determine information about individual table cells in the image to be processed, the information about the individual table cells comprising positions of bounding boxes of the individual table cells. And then, parent table cells of the individual table cells in a row direction and parent table cells of the individual table cells in a column direction are obtained based on the information about the individual table cells. Further, structural coordinates of the individual table cells can be obtained based on parent-child relationships of the individual table cells in the row direction and parent-child relationships of the individual table cells in the column direction, wherein a structural coordinate comprises a starting row, a starting column, a terminating row, and a terminating column. Compared with a graph structure, parent-child relationships of a table cell in the row direction and parent-child relationships of a table cell in the column direction are simpler. Therefore, according to this solution, an amount of computation for determining the structural coordinates of a table cell can be reduced.

## Description

This application claims priority to Chinese Patent Application No. 202210018252.1, filed with the China National Intellectual Property Administration on January 7, 2022 and entitled "A METHOD AND APPARATUS FOR TABLE RECOGNITION", which is incorporated herein by reference in its entirety.

### FIELD

This application relates to the field of image processing, and in particular, to a method and apparatus for table recognition.

### BACKGROUND

Table recognition comprises two parts: Table Structure Recognition (TSR) and Table Content Recognition (TCR), wherein structure recognition refers to parsing out a row position and a column position of individual table cells and a specific physical position of a bounding box from an image comprising a table; and content recognition refers to identifying a text in individual table cells. Structural coordinates of the individual table cells and text content in the table cell can be obtained by performing two steps of structure recognition and content recognition. Then, the table can be converted into an excel format, a word format, or another format, to facilitate further manual proofreading and editing. This greatly facilitates a digital processing flow of tabular information.

Currently, methods for table structure recognition are complex and consume a large amount of computing resources.

Therefore, there is an urgent need for a solution for resolving the foregoing problem.

### SUMMARY

A technical problem to be resolved by this application is how to simply recognize a table structure and provide a method and apparatus for table recognition.

According to a first aspect, an embodiment of this application provides a method for table recognition. The method comprises:
acquiring an image to be processed that comprises a table, and determining information about individual table cells in the image to be processed, the information about the individual table cells comprising positions of bounding boxes of the individual table cells;
obtaining, based on the information about the individual table cells, parent table cells of the individual table cells in a row direction and parent table cells of the individual table cells in a column direction; and
obtaining structural coordinates of the individual table cells based on parent-child relationships of the individual table cells in the row direction and parent-child relationships of the individual table cells in the column direction, wherein a structural coordinate comprises a starting row, a starting column, a terminating row, and a terminating column.

Optionally, the information about the individual table cells further comprises:
word embedding vectors of a text in the individual table cells and/or visual features of the individual table cells.

Optionally, obtaining, based on the information about the individual table cells, parent table cells of the individual table cells in a row direction and parent table cells of the individual table cells in a column direction comprises:
inputting the information about the individual table cells into a machine learning model to obtain parent table cells of the individual table cells in the row direction and parent table cells of the individual table cells in the column direction.

Optionally, the machine learning model comprises:
a feature extracting module, a first decision module, and a second decision module;
wherein the feature extracting module is configured to process the information about the individual table cells to obtain a feature sequence;
the first decision module is configured to obtain, based on the feature sequence, parent table cells of the individual table cells in the row direction; and
the second decision module is configured to obtain, based on the feature sequence, parent table cells of the individual table cells in the column direction.

Optionally, the feature extracting module is an encoder of a Transformer model.

Optionally, both the first decision module and the second decision module are self-attention modules.

Optionally, obtaining structural coordinates of the individual table cells based on parent-child relationships of the individual table cells in the row direction and parent-child relationships of the individual table cells in the column direction comprises:
determining the starting rows and the terminating rows of the individual table cells based on the parent-child relationships of the individual table cells in the row direction; and determining the starting columns and the terminating columns of the individual table cells based on the parent-child relationships of the individual table cells in the column direction.

Optionally, at least one tree structure is used to indicate the parent-child relationships of the individual table cells in the row direction, a table cell corresponds to a node in a tree, and determining the starting rows and the terminating rows of the individual table cells based on the parent-child relationships of the individual table cells in the row direction comprises:
determining a starting row coordinate b_i corresponding to a table cell i; determining the number r_i of rows spanned by the table cell i; and
determining, based on the b_i and the r_i, a terminating row coordinate corresponding to the table cell i as b_i+r_i-1, wherein
if a node corresponding to the table cell i in a tree where the table cell i is located lacks a sub-branch, the r_i is 1; otherwise, the number of rows corresponding to the table cell i is a sum of numbers of rows corresponding to individual sub-branches of the node; and
if the table cell i corresponds to a header node, the starting row b_i is equal to a terminating row of a previous tree of the tree where the table cell i is located plus 1;
if the table cell i corresponds to the kth sub-node of a node q, the starting row b_i is equal to b_q+sum1, wherein b_q is a starting row of the node q, and sum1 is a sum of numbers of rows spanned by (k-1) sub-branches of the node q.

Optionally, at least one tree structure is used to indicate the parent-child relationships of the individual table cells in the row direction, a table cell corresponds to a node in a tree, and determining the starting columns and the terminating columns of the individual table cells based on the parent-child relationships of the individual table cells in the column direction comprises:
determining the number s_i of columns spanned by the table cell i; determining a starting column coordinate a_i corresponding to the table cell i; and
determining, based on the s_i and the a_i, a terminating column coordinate corresponding to the table cell i as a_i+s_i-1, wherein
if a node corresponding to the table cell i in a tree where the table cell i is located lacks a sub-branch, the s_i is 1; otherwise, the number of columns corresponding to the table cell i is a sum of numbers of columns corresponding to induvial sub-branches of the node; and
if the table cell i corresponds to a header node, the starting column a_i is equal to a terminating column of a header node of a previous tree of the tree where the table cell i is located plus 1;
if the table cell i corresponds to the jth sub-node of a node p, the starting column a_i is equal to a_p+sum2, wherein a_p is a starting column of the node p, and sum2 is a sum of numbers of columns spanned by (j-1) sub-branches of the node p.

Optionally, the method further comprises:
generating a target table based on the structural coordinates of the individual table cells and texts within the individual table cells.

According to a second aspect, an embodiment of this application provides an apparatus for table recognition. The apparatus comprises:
an acquiring unit configured to acquire an image to be processed that comprises a table, and determining information about individual table cells in the image to be processed, the information about the individual table cells comprising positions of bounding boxes of the individual table cells;
a first determination unit configured to obtain, based on the information about the individual table cells, parent table cells of the individual table cells in a row direction and parent table cells of the individual table cells in a column direction; and
a second determination unit configured to obtain structural coordinates of the individual table cells based on parent-child relationships of the individual table cells in the row direction and parent-child relationships of the individual table cells in the column direction, wherein a structural coordinate comprises a starting row, a starting column, a terminating row, and a terminating column.

Optionally, the information about the individual table cells further comprises:
word embedding vectors of a text in the individual table cells and/or visual features of the individual table cells.

Optionally, the first determination unit is configured to:
input the information about the individual table cells into a machine learning model to obtain parent table cells of the individual table cells in the row direction and parent table cells of the individual table cells in the column direction.

Optionally, the machine learning model comprises:
a feature extracting module, a first decision module, and a second decision module;
wherein the feature extracting module is configured to process the information about the individual table cells to obtain a feature sequence;
the first decision module is configured to obtain, based on the feature sequence, parent table cells of the individual table cells in the row direction; and
the second decision module is configured to obtain, based on the feature sequence, parent table cells of the individual table cells in the column direction.

Optionally, the feature extracting module is an encoder of a Transformer model.

Optionally, both the first decision module and the second decision module are self-attention modules.

Optionally, the second determination unit is configured to:
determine the starting rows and the terminating rows of the individual table cells based on the parent-child relationships of the individual table cells in the row direction; and determine the starting columns and the terminating columns of the individual table cells based on the parent-child relationships of the individual table cells in the column direction.

Optionally, at least one tree structure is used to indicate the parent-child relationships of the individual table cells in the row direction, a table cell corresponds to a node in a tree, and determining the starting rows and the terminating rows of the individual table cells based on the parent-child relationships of the individual table cells in the row direction comprises:
determining a starting row coordinate b_i corresponding to a table cell i; determining the number r_i of rows spanned by the table cell i; and
determining, based on the b_i and the r_i, a terminating row coordinate corresponding to the table cell i as b_i+r_i-1, wherein
if a node corresponding to the table cell i in a tree where the table cell i is located lacks a sub-branch, the r_i is 1; otherwise, the number of rows corresponding to the table cell i is a sum of numbers of rows corresponding to individual sub-branches of the node; and
if the table cell i corresponds to a header node, the starting row b_i is equal to a terminating row of a previous tree of the tree where the table cell i is located plus 1;
if the table cell i corresponds to the k^{th} sub-node of a node q, the starting row b_i is equal to b_q+sum1, wherein b_q is a starting row of the node q, and sum1 is a sum of numbers of rows spanned by (k-1) sub-branches of the node q.

Optionally, at least one tree structure is used to indicate the parent-child relationships of the individual table cells in the row direction, a table cell corresponds to a node in a tree, and determining the starting columns and the terminating columns of the individual table cells based on the parent-child relationships of the individual table cells in the column direction comprises:
determining the number s_i of columns spanned by the table cell i; determining a starting column coordinate a_i corresponding to the table cell i; and
determining, based on the s_i and the a_i, a terminating column coordinate corresponding to the table cell i as a_i+s_i-1, wherein
if a node corresponding to the table cell i in a tree where the table cell i is located lacks a sub-branch, the s_i is 1; otherwise, the number of columns corresponding to the table cell i is a sum of numbers of columns corresponding to induvial sub-branches of the node; and
if the table cell i corresponds to a header node, the starting column a_i is equal to a terminating column of a header node of a previous tree of the tree where the table cell i is located plus 1;
if the table cell i corresponds to the j^{th} sub-node of a node p, the starting column a_i is equal to a_p+sum2, wherein a_p is a starting column of the node p, and sum2 is a sum of numbers of columns spanned by (j-1) sub-branches of the node p.

Optionally, the apparatus further comprises:
a generating unit configured to generate a target table based on the structural coordinates of the individual table cells and texts within the individual table cells.

According to a third aspect, an embodiment of this application provides a device. The device comprises a processor and a memory, wherein
the processor is configured to execute instructions stored in the memory to cause the device to perform the method according to any of the first aspect.

According to a fourth aspect, an embodiment of this application provides a computer-readable storage medium. The computer-readable storage medium comprises instructions, the instructions indicating a device to perform the method according to any of the first aspect.

According to a fifth aspect, an embodiment of this application provides a computer program product. When the computer program product is run on a computer, the computer is caused to perform the method according to any of the first aspect.

Compared with the prior art, the embodiments of this application have the following advantages.

An embodiment of this application provides a method for table recognition. In an example, an image to be processed that comprises a table may be acquired, and information about individual table cells in the image to be processed may be determined, wherein the information about individual table cells comprises positions of bounding boxes of individual table cells. Then, parent table cells of the individual table cells in a row direction and parent table cells of the individual table cells in a column direction are obtained based on the information about individual table cells. Obtaining parent table cells of the individual table cells in the row direction means obtaining the parent-child relationships of individual table cells in the row direction. Obtaining parent table cells of the individual table cells in the column direction means obtaining parent-child relationships of individual table cells in the column direction. Further, structural coordinates of the individual table cells can be obtained based on parent-child relationships of the individual table cells in the row direction and parent-child relationships of the individual table cells in the column direction, wherein a structural coordinate comprises a starting row, a starting column, a terminating row, and a terminating column. Therefore, according to this solution, structural coordinates of the individual table cells can be obtained based on the parent-child relationships of individual table cells in the row direction and the parent-child relationships of individual table cells in the column direction. Compared with a graph structure, the parent-child relationships of the table cell in the row direction and the parent-child relationships of the table cell in the column direction are simpler. Therefore, according to this solution, an amount of computation for determining structural coordinates of a table cell can be reduced.

### BRIEF DESCRIPTION OF THE SEVERAL VIEWS OF THE DRAWINGS

To describe the technical solutions in the embodiments of this application or in the prior art more clearly, the following briefly describes the accompanying drawings required for describing the embodiments or the prior art. Apparently, the accompanying drawings in the following description show merely some of the embodiments of this application, and those of ordinary skill in the art may still derive other drawings from these accompanying drawings without creative efforts.
FIG. 1 is a schematic flowchart of a method for table recognition according to an embodiment of this application;
FIG. 2 is a schematic diagram of an example scenario according to an embodiment of this application;
FIG. 3 is a schematic diagram of another example scenario according to an embodiment of this application; and
FIG. 4 is a schematic diagram of a structure of an apparatus for table recognition according to an embodiment of this application.

### DETAILED DESCRIPTION

To make those skilled in the art understand the technical solutions in this application better, the following describes the technical solutions in the embodiments of this application clearly and completely with reference to the accompanying drawings in the embodiments of this application. Apparently, the described embodiments are merely some rather than all of the embodiments of this application. All other embodiments obtained by those of ordinary skill in the art based on the embodiments of this application without creative efforts shall fall within the protection scope of this application.

The inventors of this application have found through research that in some methods, a table cell may be regarded as a node, a table is modeled as a Graph structure, a Graph Neural Network (GNN) is used to model relationships between table cells, for example, determining whether two table cells are in the same row, the same column, or the like, and then structural coordinates of the table are obtained by using a logical processing method based on whether the table cells are in the same row and whether the table cells are in the same column.

It is easy to understand that for a graph structure, there may be a relationship between any two nodes. As a result, when modeling with a graph, the relationship between nodes in the graph structure is complex, and there may even be a ring structure. Therefore, using the graph structure to obtain the structural coordinates of the table requires a complex logical processing method. And accordingly, a large amount of computing resources are consumed.

To resolve the foregoing problem, an embodiment of this application provides a method for table recognition that can obtain structural coordinates of the individual table cells based on the parent-child relationships of individual table cells in the row direction and the parent-child relationships of individual table cells in the column direction. Compared with a graph structure, the parent-child relationships of the table cell in the row direction and the parent-child relationships of the table cell in the column direction are simpler. Therefore, according to this solution, structural coordinates of the individual table cells can be determined by using a simple logical processing method, which can reduce the consumption of computing resources.

Various non-limiting implementations of this application will be described in detail below with reference to the accompanying drawings.

### EXAMPLE METHOD

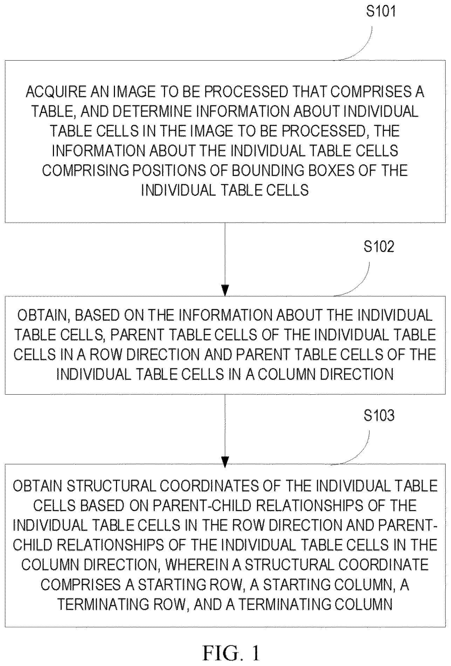

Refer to FIG. 1, which is a schematic flowchart of a method for table recognition according to an embodiment of this application. The method shown in FIG. 1 may be executed by a client or a server. This is not specifically limited in the embodiments of this application. In this embodiment, the method may comprise, for example, the following steps: S101 to S103.

S101: Acquire an image to be processed that comprises a table, and determine information about individual table cells in the image to be processed, the information about the individual table cells comprising positions of bounding boxes of the individual table cells.

In this embodiment of this application, in specific implementation, acquiring the image to be processed may comprise acquiring the image to be processed captured by a shooting device, or acquiring the image to be processed from a network resource, or obtaining the image to be processed in other manners, which is not specifically limited in this embodiment of this application.

In this embodiment of this application, the information about the individual table cells refers to information related to individual table cells.

In an example, a text in the image to be processed can be recognized using Optical Character Recognition (OCR) technology. Then, positions of bounding boxes of individual table cells is determined based on the recognized text. For convenience of description, any of the table cells is referred to as a first table cell. positions of bounding boxes of the first table cell may be a position of a text box surrounding the text in the first table cell.

In an example, in addition to the position of the bounding box of individual table cells, the information about the individual table cells may comprise word embedding vectors of a text in individual table cells. In an example, a text in individual table cells can be recognized by using the OCR technology. Then, the text in individual table cells is processed using a word embedding vector model such as bert or word2vec to obtain the word embedding vector for the text in individual table cells.

In another example, in addition to the position of the bounding box of individual table cells, the information about the individual table cells may comprise visual features of individual table cells. The visual feature of individual table cells may be a feature obtained by performing computation (for example, convolution computation) on an image region where individual table cells is located and may reflect visual information such as background color and/or texture of individual table cells.

S102: Obtain, based on the information about the individual table cells, parent table cells of the individual table cells in a row direction and parent table cells of the individual table cells in a column direction.

In an example, the parent table cell of individual table cells in the row direction and the parent table cell of individual table cells in the column direction may be determined based on a magnitude relationship between abscissa coordinates of individual table cells and a magnitude relationship between ordinate coordinates of individual table cells.

In another example, the machine learning model may be pre-trained; and then, the machine learning model is used to determine the parent table cell of individual table cells in the row direction and the parent table cell of individual table cells in the column direction. Specifically, the information about the individual table cells may be input into the machine learning model to obtain the parent table cell of individual table cells in the row direction and the parent table cell of individual table cells in the column direction.

For the machine learning model, it should be noted that in an example, the machine learning model may comprise a feature extracting module, a first decision module, and a second decision module. The feature extracting module is configured to process the input information about the individual table cells to obtain a feature sequence, wherein the feature sequence may be inputs of both the first decision module and the second decision module. The first decision module is configured to obtain the parent table cell of individual table cells in the row direction based on the feature sequence. The second decision module is configured to obtain the parent table cell of individual table cells in the column direction based on the feature sequence.

In an example, considering that the machine learning model is used to determine a parent table cell of individual node in the row direction and a parent table cell of individual node in the column direction, an output of the machine learning model depends on an input of the machine learning model. Therefore, the machine learning model may use PointerNet computation manner that is commonly used in Natural Language Processing (NLP). In addition, conventional PointerNet is based on Recurrent Neural Network (RNN). In order to enhance a long-range-dependent modeling capability of the machine learning model, so that the machine learning model can accurately determine the parent table cell of individual table cells in the row direction and the parent table cell of individual table cells in the column direction even when there are a large quantity of table cells in the table, in this embodiment of this application, PointerNet may be optimized into a Transformer-based encoder. In other words, in an example, the feature extracting module is an encoder of a Transformer model.

The encoder may comprise a self-attention module and a feedforward neural network module. Computation manners of the self-attention module and of the feedforward neural network module are similar to a computation manner of the encoder of a traditional Transformer model. Details are not described herein.

In an example, feature matrices Q and K can be obtained after the information about the individual table cells passed through the feature extracting module, wherein assuming that information input into the machine learning model comprises information about n table cells, both Q and K are matrices of n*m.

In an example, both the first decision module and the second decision module are self-attention modules.

In an example, the first decision module may calculate a correlation matrix QK^{T} of Q and K, and then perform a softmax operation on individual row of the correlation matrix to obtain *α* matrix of n*n. An element *αᵢⱼ* of the *α* matrix is used to indicate a probability value of a table cell j as a parent table cell of a table cell i in the row direction.

Similarly, the second decision module may calculate *β* matrix of n*n based on Q and K. An element *βᵢⱼ* of the *β* matrix is used to indicate a probability value of the table cell j as a parent table cell of the table cell i in the column direction.

It should be noted that for a table cell as a root node, a virtual node (for example, labeled -1) may be introduced to represent a parent node of the root node.

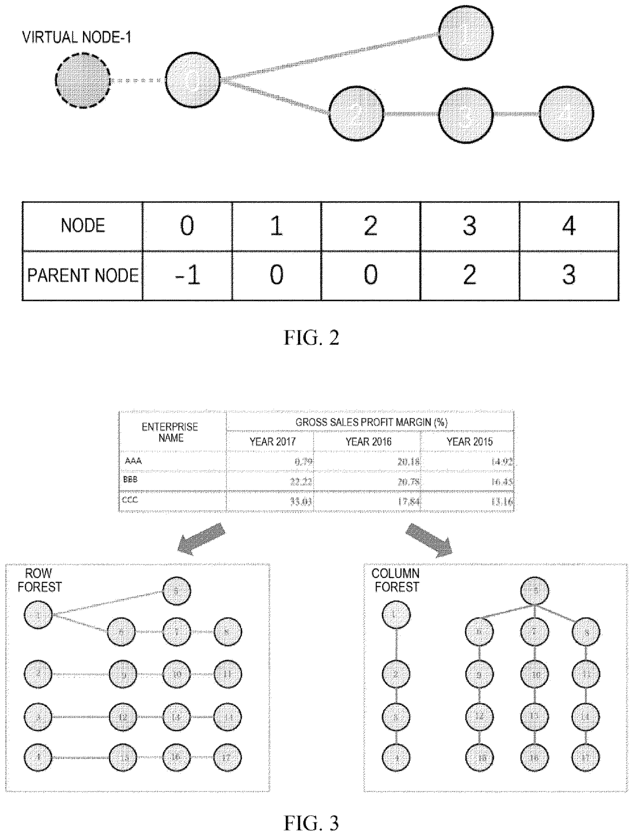

The parent node of individual table cells in the row direction is described with reference to FIG. 2. FIG. 2 is a schematic diagram of an example scenario according to an embodiment of this application. In FIG. 2, a node is used to represent a table cell.

As shown in FIG. 2, the parent node of node 0 is node -1, parent nodes of node 1 and node 2 are both node 0, the parent node of node 3 is node 2, and the parent node of node 4 is node 3. The tree structure shown in FIG. 2 can be obtained based on the parent nodes of individual node in the row direction shown in FIG. 2.

The parent node of individual table cells in the column direction and a tree structure determined based on the parent node of individual table cells in the column direction are not described herein by using examples.

In an example, the machine learning model is trained by using a training table having known structural coordinates. Because the structural coordinates of the training table are known, information about the individual table cells of the training table and the parent table cell of individual table cells in the row direction are known, and the parent table cell of individual table cells of the training table in the column direction is also known. Therefore, the above-mentioned machine learning model can be obtained via training based on the training table.

S103: Obtain structural coordinates of the individual table cells based on parent-child relationships of the individual table cells in the row direction and parent-child relationships of the individual table cells in the column direction, wherein a structural coordinate comprises a starting row, a starting column, a terminating row, and a terminating column.

After S102 is performed, the parent table cell of individual table cells in the row direction is obtained, that is, the parent-child relationships of individual table cells in the row direction is obtained. Correspondingly, the parent table cell of individual table cells in the column direction is obtained, that is, the parent-child relationships of individual table cells in the column direction is obtained. Further, S 103 may be performed to obtain structural coordinates of the individual table cells.

The parent-child relationships of individual table cells in the row direction may be embodied as a row forest, and the row forest may comprise a plurality of trees. The parent-child relationships of individual table cells in the column direction may be embodied as a column forest, and the column forest may comprise a plurality of trees.

In an example, during specific implementation of S103, the starting rows and the terminating rows of individual table cells may be determined based on the parent-child relationships of individual table cells in the row direction; and the starting column and the terminating column of individual table cells may be determined based on the parent-child relationships of individual table cells in the column direction.

Specific implementation of "determining the starting rows and the terminating rows of the individual table cells based on the parent-child relationships of the individual table cells in the row direction" is introduced first.

For a table cell i in the table cells, determining a starting row coordinate b_i corresponding to the table cell i may be determined, and the number r_i of rows spanned by the table cell i may be determined; and a terminating row coordinate of the table cell i may be determined as b_i+r_i-1 based on b_i and r_i, wherein the table cell i is any of the table cells.

For r_i, it should be noted that
if a node corresponding to the table cell i in a tree where the table cell i is located lacks a sub-branch, it means that the table cell i is a table cell having the finest granularity and, in this case, r_i is 1;
if the node corresponding to the table cell i in the tree where the table cell i is located has a sub-branch, it means that the table cell i comprises a plurality of sub-cells, and in this case, the number of rows corresponding to the table cell i is a sum of numbers of rows corresponding to individual sub-branches of the node;
when determining the number r_i of rows spanned by the table cell i, the number of rows spanned by individual node in the tree where the table cell i is located may be determined front right to left.

For b_i, it should be noted that
if the table cell i corresponds to a header node, the starting row b_i is equal to the terminating row of the header node of the previous tree of the tree where the table cell i is located plus 1, wherein the parent node of the header node is a virtual node.

As described above, a row forest may be obtained based on the parent-child relationships of individual table cells in the row direction, and the row forest may comprise a plurality of trees. In an example, the plurality of tree structures may be sorted in descending order of ordinate coordinates of header nodes in the plurality of tree structures. The previous tree of the tree where the table cell i is located refers to a tree before the tree where the table cell i is located after sorting the plurality of tree structures according to the foregoing order.

if the table cell i corresponds to the k^{th} sub-node of a node q, the starting row b_i is equal to b_q+sum1, wherein b_q is a starting row of the node q, and sum1 is a sum of numbers of rows spanned by (k-1) sub-branches of the node q. Herein:
the node q may comprise one sub-node. In this case, a value of k is 1, sum1=0, and b_i=b_q;
the node q may alternatively comprise a plurality of sub-nodes. In this case, the value of k may be greater than or equal to 1. When the value of k is 1, sum1=0, and b_i=b_q. When the value of k is greater than 1, b_i=b_q+sum1.

The starting row of the node corresponding to individual table cells may be determined from left to right, that is, the starting row of a header node may be determined first. Then, the starting row of individual sub-node of the header node is determined, and so on. By analogy, the starting row of the node q can be acquired. Correspondingly, the starting row of table cell i, which is the k^{th} sub-node of the corresponding node q, can be determined accordingly.

With reference to FIG. 3, "determining the starting rows and the terminating rows of the individual table cells based on the parent-child relationships of the individual table cells in the row direction" is described herein. FIG. 3 is a schematic diagram of another example scenario according to an embodiment of this application.

As shown in FIG. 3, for an image comprising the table shown in FIG. 3, a row forest in a lower-left region of FIG. 3 can be obtained based on the machine learning model. The row forest comprises four trees. In FIG. 3, one node corresponds to one table cell.

The number of rows spanned by individual node in the first tree is determined from right to left. Herein:
node 5 lacks branch in the first tree. In this case, the number of rows spanned by the node 5 is 1.

Similarly, node 6, node 7 and node 8 lack branch in the first tree. In this case, the number of rows spanned by the node 6, the node 7 and the node 8 is 1 respectively;
node 1 corresponds to two branches in the first tree, which are respectively a branch using the node 5 as a root node and a branch using the node 6 as a root node. The number of rows spanned by the two branches is both 1. In this case, the number of rows spanned by the node 1 is 2.

The node 1 is the header node of the first tree. In this case, the starting row of the node 1 is 0 (or 1; the starting row of the node 1 being 0 is used as an example in this application), and the terminating row of the node 1 is 0+2-1=1.

The node 5 is a first sub-node of the node 1. In this case, the starting row of the node 5 is equal to the starting row of the node 1, that is, the starting row of the node 5 is 0; and the number of rows spanned by the node 5 is 1. Therefore, the terminating row of the node 5 is 0.

The node 6 is a second sub-node of the node 1. In this case, the starting row of the node 6 is the starting row of the node 1 plus the number of rows spanned by the first sub-node of the node 1, that is, the starting row of the node 6 is 0+1=1; and the number of rows spanned by the node 6 is 1, and thus, the terminating row of the node 6 is 1.

The node 7 is a first sub-node of the node 6. In this case, the starting row of the node 7 is equal to the starting row of the node 6, that is, the starting row of the node 7 is 1; and the number of rows spanned by the node 7 is 1, and thus, the terminating row of the node 7 is 1.

The node 8 is a first sub-node of the node 7. In this case, the starting row of the node 8 is equal to the starting row of the node 7, that is, the starting row of the node 8 is 1; and the number of rows spanned by the node 8 is 1, and thus, the terminating row of the node 8 is 1.

The number of rows spanned by individual node in a second tree is determined from right to left. Node 2, node 9, node 10 and node 11 lack branch in the second tree. In this case, the number of rows spanned by the node 2, the node 9, the node 10 and the node 11 is 1, respectively.

The node 2 is the header node of the second tree. In this case, the starting row of the node 2 is 2 (the terminating row 1 of the header node of the first tree plus 1), and the terminating row of the node 2 is 2+1-1=2.

The node 9 is a first sub-node of the node 2. In this case, the starting row of the node 9 is equal to the starting row of the node 2, that is, the starting row of the node 9 is 2; and the number of rows spanned by the node 9 is 1, and thus, the terminating row of the node 9 is 2.

The node 10 is a first sub-node of the node 9. In this case, the starting row of the node 10 is equal to the starting row of the node 9, that is, the starting row of the node 10 is 2; and the number of rows spanned by the node 10 is 1, and thus, the terminating row of the node 10 is 2.

The node 11 is a first sub-node of the node 10. In this case, the starting row of the node 11 is equal to the starting row of the node 10, that is, the starting row of the node 11 is 2; and the number of rows spanned by the node 11 is 1, and thus, the terminating row of the node 11 is 2.

By analogy, the following can be obtained: starting rows and terminating rows of node 3, node 12, node 13 and node 14 are both 3; and starting rows and terminating rows of node 4, node 15, node 16 and node 17 are both 4.

Then, specific implementation of "determining the starting columns and the terminating columns of the individual table cells based on the parent-child relationships of the individual table cells in the column direction" is introduced.

For a table cell i of the table cells, the number s_i of columns spanned by the table cell i may be determined; the starting column coordinate a_i corresponding to the table cell i may be determined; and then, the terminating column coordinate corresponding to the table cell i is determined as a_i+s_i-1 based on s_i and a_i,

For the s_i, it should be noted that
if a node corresponding to the table cell i in a tree where the table cell i is located lacks a sub-branch, it indicates that the table cell i is a table cell having the finest granularity. In this case, the s_i is 1;
if a node corresponding to the table cell i in a tree where the table cell i is located has a sub-branch, the number of columns corresponding to the table cell i is the sum of numbers of the corresponding column numbers of its sub-branches.

For a_i, it should be noted that
if the table cell i corresponds to a header node, the starting column a_i is equal to a terminating column of a header node of a previous tree of the tree where the table cell i is located plus 1.

As described above, a column forest may be obtained based on the parent-child relationships of individual table cells in the column direction. The column forest may comprise a plurality of trees. In an example, the plurality of tree structure may be sorted in descending order of abscissa coordinates of header nodes in the of the plurality of tree structures. The previous tree of the tree where the table cell i is located refers to a tree before the tree where the table cell i is located after sorting the plurality of tree structures according to the foregoing order.

If the table cell i corresponds to the j^{th} sub-node of a node p, the starting column a_i is equal to a_p+sum2, wherein a_p is a starting column of the node p, and sum2 is a sum of numbers of columns spanned by (j-1) sub-branches of the node p. Herein:
the node p may comprise one sub-node. In this case, a value of j is 1, sum2=0, and a_i=a_p;
the node p may alternatively comprise a plurality of sub-nodes. In this case, the value of j may be greater than or equal to 1. When the value of j is equal to 1, sum2=0, and a_i=a_p. When the value of j is greater than 1, a_i=a_p+sum2.

The starting column of the node corresponding to individual table cells may be determined from top to bottom, that is, the starting column of a header node may be determined first. Then, the starting column of individual sub-node of the header node is determined, and so on. By analogy, the starting column of the node p can be acquired. Correspondingly, the starting column of table cell i, which is the j^{th} sub-node of the corresponding node p can be determined accordingly.

With reference to FIG. 3, "determining the starting columns and the terminating columns of the individual table cells based on the parent-child relationships of the individual table cells in the column direction" is described as an example herein.

As shown in FIG. 3, for an image comprising the table shown in FIG. 3, a column forest in a lower-right region of FIG. 3 can be obtained based on the machine learning model. The column forest comprises two trees.

The number of columns spanned by individual node in a first tree is determined from bottom to top. Herein:
Node 4, node 3, node 2 and node 1 in the first tree lack branch. In this case, the number of columns spanned by the node 4, the node 3, the node 2 and the node 1 is 1, respectively;
the node 1 is the header node of the first tree. In this case, the starting column of the node 1 is 0 (or 1; the starting column of the node 1 being 0 is used as an example in this application), and the terminating column of the node 1 is 0+1-1=0.

The node 2 is a first sub-node of the node 1. In this case, the starting column of the node 2 is equal to the starting column of the node 1, that is, the starting column of the node 2 is 0; and the number of columns spanned by the node 2 is 1, and thus the terminating column of the node 2 is 0.

The node 3 is a first sub-node of the node 2. In this case, the starting column of the node 3 is equal to the starting column of the node 2, that is, the starting column of the node 3 is 0; and the number of columns spanned by the node 3 is 1, and thus the terminating column of the node 3 is 0.

The node 4 is a first sub-node of the node 3. In this case, the starting column of the node 4 is equal to the starting column of the node 3, that is, the starting column of the node 4 is 0; and the number of columns spanned by the node 4 is 1, and thus the terminating column of the node 4 is 0.

The number of columns spanned by individual node in a second tree is determined from bottom to top. Herein:
none of node 6, node 7, node 8, node 9, node 10, node 11, node 12, node 13, node 14, node 15, node 16 and node 17 has a branch. In this case, the number of columns spanned by the node 6, the node 7, the node 8, the node 9, the node 10, the node 11, the node 12, the node 13, the node 14, the node 15, the node 16 and the node 17 is 1, respectively;
the number of columns spanned by the node 5 is a sum of numbers of columns spanned by three sub-nodes (the node 6, the node 7 and the node 8) of the node 5, that is, the number of columns spanned by the node 5 is 3.

The starting column and the terminating column of individual node in the second tree are determined from top to bottom.

The starting column of the node 5 is the terminating column of the header node in the first tree plus 1, namely, the terminating column 0 of the node 1 plus 1, so that the starting column of the node 5 is 1; and the number of columns spanned by the node 5 is 3, and thus the terminating column of the node 5 is 1+3-1=3.

The node 6 corresponds to a first sub-node of the node 5. In this case, the starting column of the node 6 is equal to the starting column of the node 5, that is, the starting column of the node 6 is 1; and the number of columns spanned by the node 6 is 1, and thus the terminating column of the node 6 is 1, too.

The node 9 is a first sub-node of the node 6. In this case, the starting column of the node 9 is equal to the starting column of the node 6, that is, the starting column of the node 9 is 1; and the number of columns spanned by the node 9 is 1, and thus the terminating column of the node 9 is 1, too. By analogy, it can be determined that starting columns and terminating columns of the node 12 and the node 15 are both 1.

The node 7 corresponds to a second sub-node of the node 5. In this case, the starting column of the node 7 is the starting column 1 of the node 5 plus the number 1 of columns spanned by the first sub-branch of the node 5, that is, the starting column of the node 7 is 2; and the number of columns spanned by the node 7 is 1, and thus the terminating column of the node 7 is 2, too.

The node 10 is a first sub-node of the node 7. In this case, the starting column of the node 10 is equal to the starting column of the node 7, that is, the starting column of the node 10 is 2; and the number of columns spanned by the node 10 is 1, and thus, the terminating column of the node 10 is 2, too. By analogy, it can be determined that starting columns and terminating columns of the node 13 and the node 16 are both 2.

The node 8 corresponds to a third sub-node of the node 5. In this case, the starting column of the node 8 is equal to the starting column 1 of the node 5 plus a sum 2 of columns spanned by the first two branches of the node 5, that is, the starting column of the node 8 is 3; and the number of columns spanned by the node 8 is 1, and thus, the terminating column of the node 8 is 3, too.

The node 11 is a first sub-node of the node 8. In this case, the starting column of the node 11 is equal to the starting column of the node 8, that is, the starting column of the node 11 is 3; and the number of columns spanned by the node 11 is 1, and thus the terminating column of the node 11 is 3, too. By analogy, it can be determined that starting columns and terminating columns of the node 14 and the node 17 are both 3.

It can be learned from the foregoing descriptions that according to this solution, structural coordinates of the individual table cells can be obtained based on the parent-child relationships of individual table cells in the row direction and the parent-child relationships of individual table cells in the column direction. Compared with a graph structure, the parent-child relationships of a table cell in the row direction and the parent-child relationships of the table cell in the column direction are simpler. Therefore, according to this solution, an amount of computation for determining structural coordinates of a table cell can be reduced.

In an example, after structural coordinates of the individual table cells are determined, a target table may be generated based on the structural coordinates of the individual table cells and a text in individual table cells. The text in individual table cells can be obtained through the OCR technology.

A format of the target table is not limited in this embodiment of this application, and may be an excel format, a word format, or another format. This is not limited herein.

When the target table is in the excel format, a total number of columns and a total number of rows of the table may be determined based on structural coordinates of the individual table cells , so that the table cells are divided based on the total number of columns and the total number of rows first when generating the target table, and then, an operation of combining the table cells is performed based on the structural coordinates of the individual table cells to obtain individual table cells in the target table.

The total number of columns is a difference obtained by subtracting the minimum value of the starting column of individual table cells from the maximum value of the terminating column of individual table cells plus 1. For the scenario shown in FIG. 3, the maximum value of the terminating column of individual table cells is 3, and the minimum value of the starting column of individual table cells is 0, then the total number of columns is 3-0+1=4.

The total number of rows is a difference obtained by subtracting the minimum value of the starting row of individual table cells from the maximum value of the terminating row of individual table cells plus 1. For the scenario shown in FIG. 3, the maximum value of the terminating row of individual table cells is 4, and the minimum value of the starting row of individual table cells is 0. Therefore, the total number of rows is 4-0+1=5.

### EXAMPLE DEVICE

Based on the method provided in the foregoing embodiments, an embodiment of this application further provides an apparatus. The apparatus is described below with reference to the accompanying drawings.

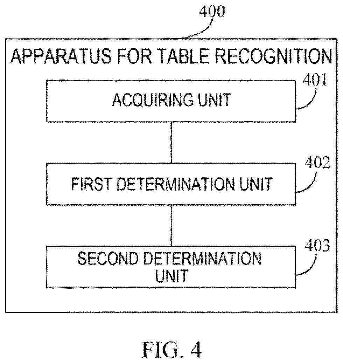

FIG. 4 is a schematic diagram of a structure of an apparatus for table recognition according to an embodiment of this application. For example, the apparatus 400 may specifically comprise an acquiring unit 401, a first determination unit 402, and a second determination unit 403.

The acquiring unit 401 is configured to acquire an image to be processed that comprises a table, and determining information about individual table cells in the image to be processed, the information about the individual table cells comprising positions of bounding boxes of the individual table cells.

The first determination unit 402 is configured to obtain, based on the information about the individual table cells, parent table cells of the individual table cells in a row direction and parent table cells of the individual table cells in a column direction;

The second determination unit 403 is configured to obtain structural coordinates of the individual table cells based on parent-child relationships of the individual table cells in the row direction and parent-child relationships of the individual table cells in the column direction, wherein a structural coordinate comprises a starting row, a starting column, a terminating row, and a terminating column.

Optionally, the information about the individual table cells further comprises:
word embedding vectors of a text in the individual table cells and/or visual features of the individual table cells.

Optionally, the first determination unit 402 is configured for:
inputting the information about the individual table cells into a machine learning model to obtain parent table cells of the individual table cells in the row direction and parent table cells of the individual table cells in the column direction.

Optionally, the machine learning model comprises:

a feature extracting module, a first decision module, and a second decision module.
a feature extracting module, a first decision module, and a second decision module;
wherein the feature extracting module is configured to process the information about the individual table cells to obtain a feature sequence;
the first decision module is configured to obtain, based on the feature sequence, parent table cells of the individual table cells in the row direction; and
the second decision module is configured to obtain, based on the feature sequence, parent table cells of the individual table cells in the column direction.

Optionally, the feature extracting module is an encoder of a Transformer model.

Optionally, both the first decision module and the second decision module are self-attention modules.

Optionally, the second determination unit 403 is configured for:
determining the starting rows and the terminating rows of the individual table cells based on the parent-child relationships of the individual table cells in the row direction; and determining the starting columns and the terminating columns of the individual table cells based on the parent-child relationships of the individual table cells in the column direction.

Optionally, at least one tree structure is used to indicate the parent-child relationships of the individual table cells in the row direction, a table cell corresponds to a node in a tree, and determining the starting rows and the terminating rows of the individual table cells based on the parent-child relationships of the individual table cells in the row direction comprises:
determining a starting row coordinate b_i corresponding to a table cell i; determining the number r_i of rows spanned by the table cell i; and
determining, based on the b_i and the r_i, a terminating row coordinate corresponding to the table cell i as b_i+r_i-1, wherein
if a node corresponding to the table cell i in a tree where the table cell i is located lacks a sub-branch, the r_i is 1; otherwise, the number of rows corresponding to the table cell i is a sum of numbers of rows corresponding to individual sub-branches of the node; and
if the table cell i corresponds to a header node, the starting row b_i is equal to a terminating row of a previous tree of the tree where the table cell i is located plus 1;
if the table cell i corresponds to the k^{th} sub-node of a node q, the starting row b_i is equal to b_q+sum1, wherein b_q is a starting row of the node q, and sum1 is a sum of numbers of rows spanned by (k-1) sub-branches of the node q.

Optionally, at least one tree structure is used to indicate the parent-child relationships of the individual table cells in the row direction, a table cell corresponds to a node in a tree, and determining the starting columns and the terminating columns of the individual table cells based on the parent-child relationships of the individual table cells in the column direction comprises:
determining the number s_i of columns spanned by the table cell i; determining a starting column coordinate a_i corresponding to the table cell i; and
determining, based on the s_i and the a_i, a terminating column coordinate corresponding to the table cell i as a_i+s_i-1, wherein
if a node corresponding to the table cell i in a tree where the table cell i is located lacks a sub-branch, the s_i is 1; otherwise, the number of columns corresponding to the table cell i is a sum of numbers of columns corresponding to induvial sub-branches of the node; and
if the table cell i corresponds to a header node, the starting column a_i is equal to a terminating column of a header node of a previous tree of the tree where the table cell i is located plus 1;
if the table cell i corresponds to the j^{th} sub-node of a node p, the starting column a_i is equal to a_p+sum2, wherein a_p is a starting column of the node p, and sum2 is a sum of numbers of columns spanned by (j-1) sub-branches of the node p.

Optionally, the apparatus further comprises:
a generating unit configured to generate a target table based on the structural coordinates of the individual table cells and texts within the individual table cells.

Because the apparatus 400 is an apparatus corresponding to the method for table recognition provided in the foregoing method embodiment, specific implementation of units of the apparatus 400 has a same concept as that of the method for table recognition described in the foregoing method embodiment. Therefore, for the specific implementation of the units of the apparatus 400, reference may be made to a related description portion of the foregoing method embodiment. Details are not described herein again.

An embodiment of this application further provides a device. The device comprises a processor and a memory;
the processor is configured to execute instructions stored in the memory to cause the device to perform the method according to the foregoing method embodiment.

An embodiment of this application provides a computer-readable storage medium comprising instructions, the instructions indicating a device to perform the method according to the foregoing method embodiment.

An embodiment of this application further provides a computer program product, wherein when the computer program product is run on a computer, the computer is caused to perform the method according to the foregoing method embodiment.

Those skilled in the art may easily figure out other implementation solutions of this application after considering the description and practicing the invention disclosed herein. This application is intended to cover any variations, uses, or adaptive changes of this application. Such variations, uses, or adaptive changes follow the general principle of this application and comprise common knowledge or conventional technical means in the art which is not disclosed in this application. The description and embodiments are merely considered as examples. The true scope and spirit of this application are defined by the appended claims.

It should be understood that this application is not limited to the exact structure that has been described above and shown in the accompanying drawings, and various modifications and changes may be made without departing from the scope of this application. The scope of this application is defined only by the appended claims.

Described above are merely preferred examples of this application and are not intended to limit this application. Any modifications, equivalent substitutions, improvements, and the like made within the spirit and principle of this application shall fall within the protection scope of this application.

## Claims

1. A method of table recognition, comprising:
acquiring an image to be processed that comprises a table, and determining information about individual table cells in the image to be processed, the information about the individual table cells comprising positions of bounding boxes of the individual table cells;
obtaining, based on the information about the individual table cells, parent table cells of the individual table cells in a row direction and parent table cells of the individual table cells in a column direction; and
obtaining structural coordinates of the individual table cells based on parent-child relationships of the individual table cells in the row direction and parent-child relationships of the individual table cells in the column direction, wherein a structural coordinate comprises a starting row, a starting column, a terminating row, and a terminating column.

2. The method of claim 1,wherein the information about the individual table cells further comprises:
word embedding vectors of a text in the individual table cells and/or visual features of the individual table cells.

3. The method of claim 1 or 2, wherein obtaining, based on the information about the individual table cells, parent table cells of the individual table cells in a row direction and parent table cells of the individual table cells in a column direction comprises:
inputting the information about the individual table cells into a machine learning model to obtain parent table cells of the individual table cells in the row direction and parent table cells of the individual table cells in the column direction.

4. The method of claim 3, wherein the machine learning model comprises:
a feature extracting module, a first decision module, and a second decision module;
wherein the feature extracting module is configured to process the information about the individual table cells to obtain a feature sequence;
the first decision module is configured to obtain, based on the feature sequence, parent table cells of the individual table cells in the row direction; and
the second decision module is configured to obtain, based on the feature sequence, parent table cells of the individual table cells in the column direction.

5. The method of claim 4, wherein the feature extracting module is an encoder of a Transformer model.

6. The method of claim 4, wherein both the first decision module and the second decision module are self-attention modules.

7. The method of claim 1, wherein obtaining structural coordinates of the individual table cells based on parent-child relationships of the individual table cells in the row direction and parent-child relationships of the individual table cells in the column direction comprises:
determining the starting rows and the terminating rows of the individual table cells based on the parent-child relationships of the individual table cells in the row direction; and determining the starting columns and the terminating columns of the individual table cells based on the parent-child relationships of the individual table cells in the column direction.

8. The method of claim 7, wherein at least one tree structure is used to indicate the parent-child relationships of the individual table cells in the row direction, a table cell corresponds to a node in a tree, and determining the starting rows and the terminating rows of the individual table cells based on the parent-child relationships of the individual table cells in the row direction comprises:
determining a starting row coordinate b_i corresponding to a table cell i; determining the number r_i of rows spanned by the table cell i; and
determining, based on the b_i and the r_i, a terminating row coordinate corresponding to the table cell i as b_i+r_i-1, wherein
if a node corresponding to the table cell i in a tree where the table cell i is located lacks a sub-branch, the r_i is 1; otherwise, the number of rows corresponding to the table cell i is a sum of numbers of rows corresponding to individual sub-branches of the node; and
if the table cell i corresponds to a header node, the starting row b_i is equal to a terminating row of a previous tree of the tree where the table cell i is located plus 1;
if the table cell i corresponds to the k^{th} sub-node of a node q, the starting row b_i is equal to b_q+sum1, wherein b_q is a starting row of the node q, and sum1 is a sum of numbers of rows spanned by (k-1) sub-branches of the node q.

9. The method of claim 7, wherein at least one tree structure is used to indicate the parent-child relationships of the individual table cells in the row direction, a table cell corresponds to a node in a tree, and determining the starting columns and the terminating columns of the individual table cells based on the parent-child relationships of the individual table cells in the column direction comprises:
determining the number s_i of columns spanned by the table cell i; determining a starting column coordinate a_i corresponding to the table cell i; and
determining, based on the s_i and the a_i, a terminating column coordinate corresponding to the table cell i as a_i+s_i-1, wherein
if a node corresponding to the table cell i in a tree where the table cell i is located lacks a sub-branch, the s_i is 1; otherwise, the number of columns corresponding to the table cell i is a sum of numbers of columns corresponding to induvial sub-branches of the node; and
if the table cell i corresponds to a header node, the starting column a_i is equal to a terminating column of a header node of a previous tree of the tree where the table cell i is located plus 1;
if the table cell i corresponds to the j^{th} sub-node of a node p, the starting column a_i is equal to a_p+sum2, wherein a_p is a starting column of the node p, and sum2 is a sum of numbers of columns spanned by (j-1) sub-branches of the node p.

10. The method of claim 1, wherein the method further comprises:
generating a target table based on the structural coordinates of the individual table cells and texts within the individual table cells.

11. An apparatus for table recognition, comprising:
an acquiring unit configured to acquire an image to be processed that comprises a table, and determine information about individual table cells in the image to be processed, the information about the individual table cells comprising positions of bounding boxes of the individual table cells;
a first determination unit configured to obtain, based on the information about the individual table cells, parent table cells of the individual table cells in a row direction and parent table cells of the individual table cells in a column direction; and
a second determination unit configured to obtain structural coordinates of the individual table cells based on parent-child relationships of the individual table cells in the row direction and parent-child relationships of the individual table cells in the column direction, wherein a structural coordinate comprises a starting row, a starting column, a terminating row, and a terminating column.

12. A device, wherein the device comprises a processor and a memory; and
the processor is configured to execute instructions stored in the memory to cause the device to perform the method according to any of claims 1 to 10.

13. A computer-readable storage medium comprising instructions, the instructions indicating a device to perform the method according to any of claims 1 to 10.

14. A computer program product, wherein when the computer program product is run on a computer, the computer is caused to perform the method according to any of claims 1 to 10.
